# EUROPEAN PATENT SPECIFICATION

(11) **EP 4 469 351 B1**
(45) Date of publication and mention of the grant of the patent: **08.04.2026**
(21) Application number: 23701529.2
(22) Date of filing: 24.01.2023
(51) Int. Cl.: B64F 1/36, B60P 3/00

(54) **A TRANSPORT LOAD CARRIER FOR A BAGGAGE HANDLING SYSTEM**
TRANSPORTLASTTRÄGER FÜR EIN GEPÄCKHANDHABUNGSSYSTEM
SUPPORT DE CHARGE DE TRANSPORT POUR UN SYSTÈME DE MANIPULATION DE BAGAGES

(30) Priority: 24.01.2022 EP 22152881
(43) Date of publication of application: 04.12.2024
(73) Proprietor: BEUMER Group A/S, 8200 Aarhus N (DK)
(72) Inventor: EDSLEV, Uffe, 8600 Silkeborg (DK); NIELSEN, Ejnar, 8543 Hornslet (DK); SKYUM, Henrik Frank, 8370 Hadsten (DK); LAURSEN, Andreas, 8700 Horsens (DK)
(74) Representative: Novagraaf Group
(86) International application number: PCT/EP2023/051660
(87) International publication number: WO 2023/139281

(56) References cited:
- EP-A1- 2 821 324
- WO-A1-2018/017053
- CN-A- 108 958 259
- DE-A1- 102009 019 135
- DE-A1- 102010 007 014
- JP-A- 2021 067 526

## Description

### FIELD OF THE INVENTION

The present invention relates to a transport load carrier for a baggage handling system, such as a luggage handling system in an airport. The invention also relates to a corresponding transport system, in particular a baggage handling system (BHS), and a corresponding method for controlling a transport load carrier.

### BACKGROUND OF THE INVENTION

DE 10 2009 019 135 A1 discloses a feeding system for transporting luggage or the like, in particular aircraft luggage. The system comprises a plurality of containers or transport platforms with wheels or balls that are movable on a pathway. At least one of the wheels or balls are driven making the transport platform self-propelled. At least one of the wheels or balls are steerable, so the transport platform can move forwards and backwards as well as to the sides.

In EP 2 821 324 A1, WO 2015/002539 A1 and WO 2015/002540 A1 different aspects are disclosed of a method of transporting objects, such as items of luggage, with an automatically controllable vehicle. The vehicle has four wheels provided on the distal ends of two axles or support arms. These support arms are both pivotally arranged on a chassis. At each wheel there is an electric motor for driving the wheels. A control unit on the vehicle controls the drive motors to obtain a predetermined vehicle speed and can control the angular position of the support arms for changing the direction of the vehicle. Due to the control units of the vehicle it can also be ensured that the object to be supplied onto the vehicle comes to lie straight on the carrying surface of the vehicle. In the three disclosures, the transport area is described to be a substantially flat ground surface. A central control unit controls a number of vehicles such that pieces of luggage are transported from a supply location to a further location.

WO 2018/017053 A1 discloses another baggage transport system, which includes a central controller and a plurality of vehicles. The vehicles are in communication with and separate from the central controller, and each vehicle includes a platform for carrying baggage and a controller including a memory and a processor. The central controller is programmed to receive an input associated with an object and transmit a destination to the vehicle based on the input. The vehicle is programmed to receive an object, such as baggage, on the platform and navigate to the destination.

In baggage handling systems in airports or the like, the baggage is moved on containers or totes. The totes are moved by a driven belt conveyor track or a roller conveyor track and sorted during the transport within the baggage handling system from their individual pick-up point to the points of destination for the baggage on the totes. The capacity of the baggage handling system may be expressed as the amount of containers or totes per hour the system can handle. A high capacity is required in such baggage handling systems, for instance in an airport where all the baggage from an aircraft that has just arrived should be handled fast in order to provide a high service level to the airline companies and their passengers.

In the airports, space is a constraint when installing a baggage handling system and may limit the capacity of the system. The baggage handling systems often utilize a system of conveyor belts defining transport routes and sorters to direct the baggage through the tracks of conveyor belts to the destinations of the pieces of baggage. Besides being taking up a lot of space, such systems are also relative inflexible. Hence, it is an object of the invention to provide for a baggage handling system which is more flexible in use and makes better use of the space available.

### SUMMARY OF THE INVENTION

In a first aspect of the invention according to claim 1, this object may be achieved by providing a transport load carrier for a baggage handling system, such as a luggage handling system in an airport, said transport load carrier comprising a platform for receiving and accommodating a load, such as one or more items of luggage, a plurality of wheels wherein the wheels are self-driven by drive means, and wherein the orientation of the wheels is adjustable by adjustment means for rotating the load carrier or turning its transport direction with or without rotating the load carrier, and a control unit for controlling the drive means at the wheels and controlling the adjustment means of the wheels for the execution of a load transport task.

By using a load carrier according to the invention, a new concept for baggage handling may be provided. Advantageously, the load carrier according to the invention is self-propelled and capable of ground transportation in any direction in the horizontal plane (x-y plane) and can rotate about a vertical axis (z-axis). These two types of actions can be performed simultaneously or independent of each other. This allows for an unprecedented flexibility with regard to the transport of baggage on such load carriers in an airport baggage handling system.

In order to achieve the full degree of freedom with regard to the manoeuvrability of the load carrier, according to the invention the orientation of the wheels may be adjusted by swivelling the wheels individually for at least 180°, preferably at least 360°.

In a preferred embodiment, all the wheels are individually adjustable by the adjustment means, and preferably all the wheels are self-driven.

In a preferred embodiment, the wheels are electrically driven and wherein the drive means comprise a drive source in the form of a rechargeable power source, in particular an electrical power source, such as a battery.

According to the invention, the adjustment of the orientation of the wheels is controlled by the control unit, and selectively comprises any of the wheel configurations where
- all wheels are aligned in the same direction;
- a set of wheel is aligned in a determined direction;
- the wheels are aligned for rotating the load carrier about an axis perpendicular or substantially perpendicular to the platform; or
- the wheels are turned in mutually blocking directions to produce a locked position.

By altering between these different configurations of wheel orientation the control unit can perform the necessary different movements of the load carrier, including rotating the load carrier when it is stationary as well as while the load carrier is moving in a specific direction along a pathway. This may be advantageous as the load carrier thereby can prepare for receiving or unloading a piece of luggage while it is driving and thereby reduce the required time for handling an individual piece of baggage and in turn increase the capacity of the baggage handling system.

Furthermore, it may be advantageous in relation to the controlling of the load carrier that in order to prevent the load carrier from moving, the wheels can be configured so the drive direction of all the wheels are intersecting.

In an advantageous embodiment of the invention, the load carrier is provided with at least one side stop to prevent the load from falling off the platform during transport or stops, preferably at least two mutually perpendicular side stops of the platform, which preferably is substantially rectangular. This is advantageous in particular, but not exclusively, in combination with the individually controllable wheels as the load carrier can be rotated so the side stop or stops are oriented relative to the direction of movement so the at least one side stop prevents the piece of luggage on the platform from falling off during accelerations, turns and stops of the load carrier. Moreover, the load carrier can also be oriented so that there is no side stop to the side to which the luggage is to be unloaded or otherwise discharged from the platform.

Preferably, the load carrier is open on two adjacent sides of the platform in order to allow a load to be loaded to the carrier from either of the open sides. This provides for a better assurance that the luggage is retained on the platform during the transport. By providing the side stops on two adjacent sides of the rectangular platform the baggage is better prevented from falling off due to accelerations where the load carrier increases or decreases its speed in combination with driving through a turn and thereby imposing centrifugal forces on the baggage on the platform. More preferably, the opening on two adjacent sides of the platform may facilitate deloading of a load from the transport load carrier by a controlled moving pattern by the transport load carrier causing a deloading force on the load which is sufficient for deloading of the load, e.g. baggage from the load transport carrier. Advantageous, there is provided essentially a passive way of deloading a load from the transport load carrier because the drive means already present for moving the carrier can be applied for deloading and no dedicated deloading actuation or displacing means are needed.

In an advantageous embodiment, the transport load carrier may comprise an upper, detachable platform supporting the load during transport, and wherein the platform is detachably mounted on the transport load carrier. This may enable integrating with container or tote-based baggage handling systems, where the platform according to the present invention may be applied as a container or a tote. Preferably, the transport load carrier may comprise a corresponding receiving portion, preferably an upwards opening, for a quick and non-complex way of detachably mounting and securing the upper, detachable platform during transport. Thereby the upper, detachable platform - when detached from the carrier - can be applied independently for supporting the load, such as one or more items of luggage, during transport in a baggage handling system (BHS), preferably on a conveyor. The invention thereby makes it is possible to integrate transport load carriers into BHSs based on totes or containers supporting a load.

In an advantageous embodiment, the underside of the platform is concave. This allows for the load carrier to drive on uneven surfaces, comprising paths with convex surfaces. As the wheels are preferably positioned in each of the corners of the load carrier underneath the platform, the load carrier is also well adapted to drive on concave surfaces as well.

In an embodiment, weighing sensors are provided on each wheel of the load carrier. By measuring the load on the carrier, i.e. the weight of the luggage, a more accurate control of the movement may be provided and any risk of overloading the carrier can be avoided.

In an embodiment of the invention, the load carrier is an autonomous controllable vehicle or an automatically guided vehicle. Accordingly, the control unit preferably comprises receiving means for receiving the load transport task associated with a receipt of a load and which includes information about the destination of the load or load carrier.

In a second aspect of the invention according to claim 14 there is provided a transport system, in particular a baggage handling system, such as a luggage handling system in an airport, comprising
- a plurality of transport load carriers as described above,
- one or more supply stations from which a load can be transferred onto the platform of one of the transport load carriers for being transported to a destination;
- one or more delivery stations at which the transport load carriers can off-load their loads;
- a system of pathways providing at least one transport surface for the transport load carriers between said one or more supply stations and one or more delivery stations; and
- a common control system communicating with the transport load carriers for processing individual load transport tasks in the transport system.

As a third aspect of the invention according to claim 21 there is provide a method of transporting a load with an autonomously driven transport load carrier for a baggage handling system, such as a luggage handling system in an airport, said method comprising
- providing a transport system as described above;
- feeding a load, such as an item of luggage, onto a transport load carrier; and
- in a common control system activating a load transport task for the load on the transport load carrier.

This transport system and the associated method for baggage handling is advantageous as there are no special requirements to the pathways for the load carriers. The load carriers are able to drive on inclined/declined surfaces. No prefixed conveyor tracks are needed as the load carriers can drive on their own on the pathways defined in the system.

Furthermore, it may be advantageous that the system of pathways includes an inclined and/or declined or straight and level transport surface on which the transport load carriers can drive.

There are as such no special requirements to the pathways. The system of pathways may include pathways with side rails, without side rails, orthogonal turned pathways, such as left-hand turns and right-hand turns. The side rails may be provided with means for communicating with the load carriers to guide the load carriers along the pathways and/or so the control units of the load carriers can identify the limits of the pathways that they should stay within during their transport drives through the system.

In an embodiment, at least one of the supply stations comprises a sloping section of pathway, which may be provided with a stop bar on the side opposite a discharger supplying the load onto a load carrier. The sloping section may provide for easy receipt of the load supplied to the load carrier. Furthermore, the sloping section is with or without a stop bar. Accordingly, if needed, the stop bar may prevent the load carrier from being pushed off the predetermined pathway when a load is delivered onto the platform of the load carrier.

In an alternative embodiment, the supply station may comprise a conveyor above a section of the pathway for the load carriers, so that a load is transported on said conveyor with a predetermined speed and is transferred onto a designated load carrier arranged underneath said conveyor.

In an embodiment, at least one of the delivery stations comprises a section of the pathway which is sloped and provided with a stop bar at the end of said pathway. The stop bar prevents the load carrier from driving off the pathway section but does not extend as high as to hinder the load sliding off. Hereby, the load can be forced off as the load carrier can impact the stop bar so that the load will slide off the platform not only due to the sloping pathway but also due to the impact with the stop bar.

A specific load transport task may be stored on the control unit of the load carrier and activated by a communication signal from the common control system, or the load transportation task may be transmitted to the control unit of the transport load carrier for executing by said load transport carrier.

These two embodiments, may be used supplementing each other or individually. It is advantageous to establish decentralized communication between the load carriers to mitigate information not yet known by proxy load carrier information such as congestion, localized items on the tracks, missing central communication and the like. This may be achieved by the control unit on the load carrier so that a decentralized controlling of the load carrier becomes possible.

In yet another non-claimed aspect of the invention, there is provided a transport system, in particular a baggage handling system, such as a luggage handling system in an airport, comprising
- a plurality of transport load carriers according to the first aspect of the invention,
- a supply station from which a load can be transferred onto the platform of one of the transport load carriers for being transported to a destination;
- a system of pathways providing at least one transport surface for the transport load carriers to and/from said supply station, and
- a common control system communicating with the transport load carriers for processing and executing individual load transport tasks in the transport system. wherein the supply station comprises a conveyor above a section of the pathway for the transport load carriers, so that a load is transported on said conveyor with a predetermined speed and is transferred onto a designated transport load carrier arranged underneath said conveyor, preferably falling by gravity from an end point of the conveyor onto the designated transport load carrier in a controlled manner. Preferably, the designated transport load carrier may have a corresponding position and/or orientation as the falling load is expected to have also on the transport load carrier, thereby provided an optimum fit for the load on the transport load carrier minimizing the risk of losing the load and/or misplacement of load during the transfer from the conveyor onto the transport load carrier according to the first aspect of the invention.

In another non-claimed aspect of the invention, there is provided a transport system, in particular a baggage handling system, such as a luggage handling system in an airport, comprising
- a plurality of transport load carriers according to the first aspect of the invention,
- a delivery station at which the transport load carriers can off-load their loads;
- a system of pathways providing at least one transport surface for the transport load carriers to and/from said delivery station, and
- a common control system communicating with the transport load carriers for processing and executing individual load transport tasks in the transport system, wherein the delivery station comprises a section of the pathway which is sloped and provided with a stop bar at the end of said pathway, preferably said stop bar is arranged so that when the transport load carrier is arriving with a load, the transport load carrier is oriented such that no side stop is present where the stop bar is present. The transport load carrier may then hit the stop bar and the load e.g. baggage will slide off the platform of the transport load carrier and onwards to the unloading station equipment for further handling and processing, such as loading onto an aircraft or delivery to the passenger at a re-claim carousel system or the like.

By the invention it is realised that although the aspects of the invention are described with reference to baggage handling suitable for an airport baggage handling system, the invention may equally be used for a parcel handling system handling parcels or similar mail items.

### DETAILED DESCRIPTION

In the following the invention is described in more detail with reference to the embodiments shown in the accompanying drawings, in which:
Fig. 1 is a perspective top view of a transport load carrier according to a first embodiment of the invention;
Fig. 2 is a perspective bottom view of same;
Figures 2a-2f are schematic bottom views of different configurations of the orientations of the wheels of a load carrier of figures 1 and 2;
Fig. 3 is a graphic illustration of an example of a transport path in a transport system according to the invention;
Fig. 4 is another graphic illustration of an example of a transport path in a transport system according to the invention; and
Figures 5 to 10 are detailed views of the receiving and discharging of baggage to and from a transport load carrier according to various embodiments of the invention, and Fig. 11 is a perspective top view of a transport load carrier according to another embodiment of the invention.

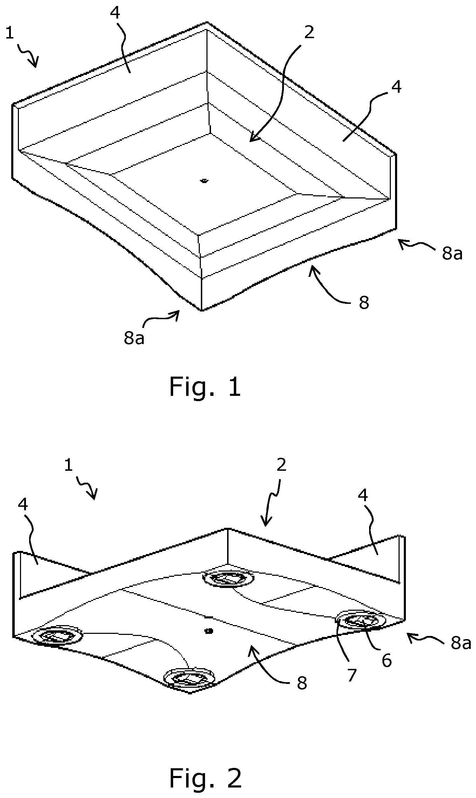

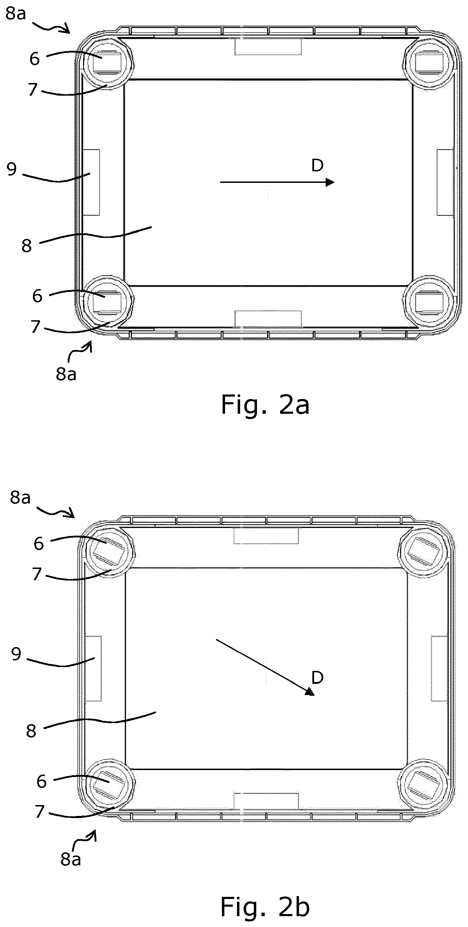

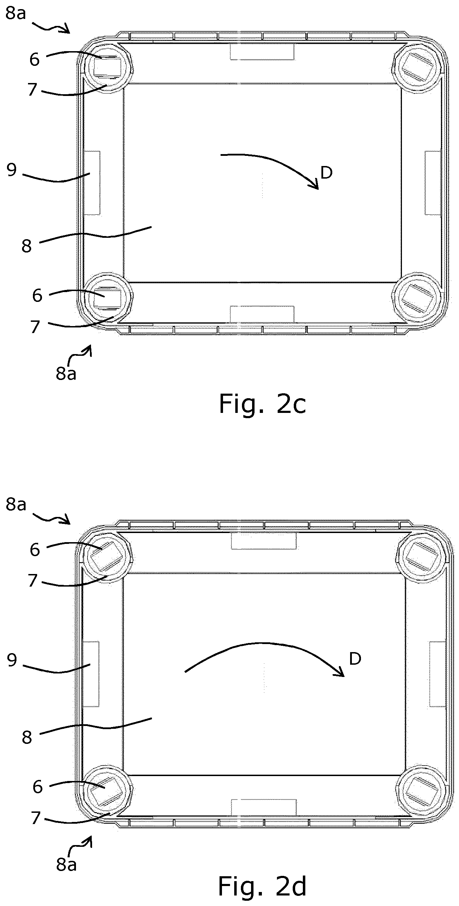

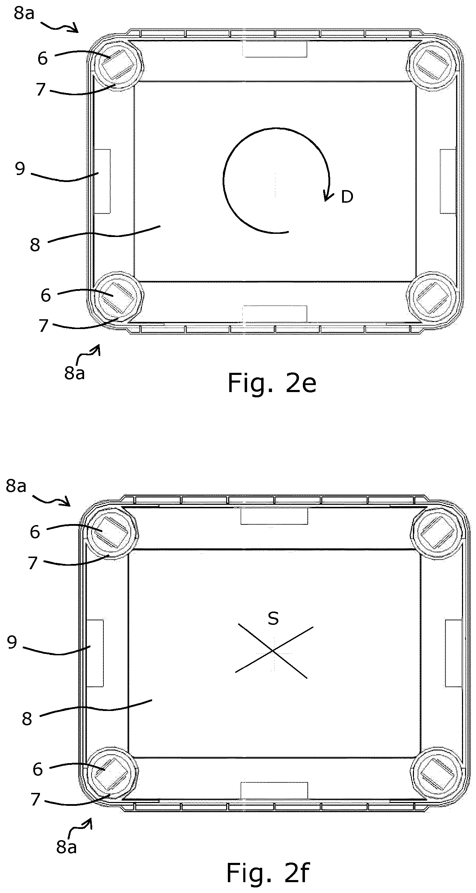

With reference to figures 1 and 2, there is shown a load carrier 1 according to a currently preferred embodiment of the invention. The load carrier 1 comprises a platform 2 for receiving and accommodating a load, such as a piece of baggage in an airport baggage handling system. The platform 2 may be flat or shaped with a somewhat concave configuration, such as shown in fig. 1. The platform 2 may be substantially rectangular and provided with side stops 4 on two of the four sides to prevent the baggage from falling off during transport, whilst also ensuring open sides on the platform for loading and unloading the baggage. In the figures an embodiment is shown with two adjacent side stops 4, but by the invention it is realised that different configurations of the side stops 4 may be provided.

On the underside 8, the load carrier 1 is provided with wheels 6 in each corner 8a.

The wheels 6 are mounted in a swivel mount 7 so that the orientation of each of the wheels 6 may be adjusted. The wheels 6 are driven and the swivel mount is a rotational mount. The load carriers 1 - also called totes - are driven by four wheels 6, which each are electrically driven and able to swivel 360°. The electrical drive means may also include a drive source in the form of a rechargeable power battery.

This results in the load carrier being self-propelled and capable of ground transportation in any direction in the horizontal plane (x-y plane) and can rotate about a vertical axis (z-axis) due to the adjustment of the direction of the wheels 6 by their rotational mounting 7. As shown in figures 1 and 2, the underside 8 of the load carrier 1 is preferably provided with a concave-like shape so that the wheels 6 in the corners 8a are the lowermost points on the load carrier 1 and with a concave lower surface 8 of the load carrier between the wheels. Hereby, the ride height is increased between the wheels 6 and the load carrier 1 is thereby better at driving on sloping surfaces. The load carrier 1 is provided with sensors 9 on their sides and a control unit (not shown) to control the movement of the load carrier. The sensors 9 (see fig. 2a) may be optical sensors, such as vision systems, cameras, or other types of sensors. The control unit controls the drive means at each of the wheels 6 and controls the adjustment means of the rotary mount 7 of the wheels 6 for the execution of a load transport task, which is provided to the control unit of the load carrier via a wireless data communication.

The orientation of the wheels may be adjusted by swivelling the wheels individually for at least 180°, preferably at least 360° and all the wheels are individually adjustable. Since the adjustment of the orientation of the wheels 6 is controlled by the control unit, and may be positioned in different configurations that may also be changed during transport. The wheel configurations are schematically shown in figures 2a-2f and may include:
i) A first configuration where all wheels are aligned in the same direction. This allows the load carrier to drive in a straight line (see figures 2a and 2b).
ii) In a second type of configuration, a set of the wheels is aligned in a determined direction, whereas the other set of wheels is aligned in another direction. This will course the load carrier to drive in a curve (see figures 2c and 2d).
iii) In a third type of configuration, the orientations of the wheels 6 are adjusted so that the directions of the wheels 6 are tangential to a circle, so that the wheels 6 are aligned for rotating the load carrier 1 about an axis perpendicular or substantially perpendicular to the platform/lower surface 8 (see figure 2e). Hereby, the load carrier 1 can be oriented in a particular direction, e.g. in relation to the side stops, in order to prepare for loading or unloading baggage or to orient the load carrier in preparation for entering an inclining or declining section of its pathway.
iv) In this fourth configuration, the wheels 6 in each corner 8a are turned in mutually blocking directions to produce a locked position (see figure 2f). Hereby, the load carrier 1 can be parked and the wheels 6 will act as a parking break.

When driving the load carrier, any of the configurations i) to iii) can be used either individually or in combination to steer the load carrier through its pathway. In each of the configurations in figures 2a-2e the driving direction is indicated with an arrow D and in figure 2f the parking is marked with a cross S.

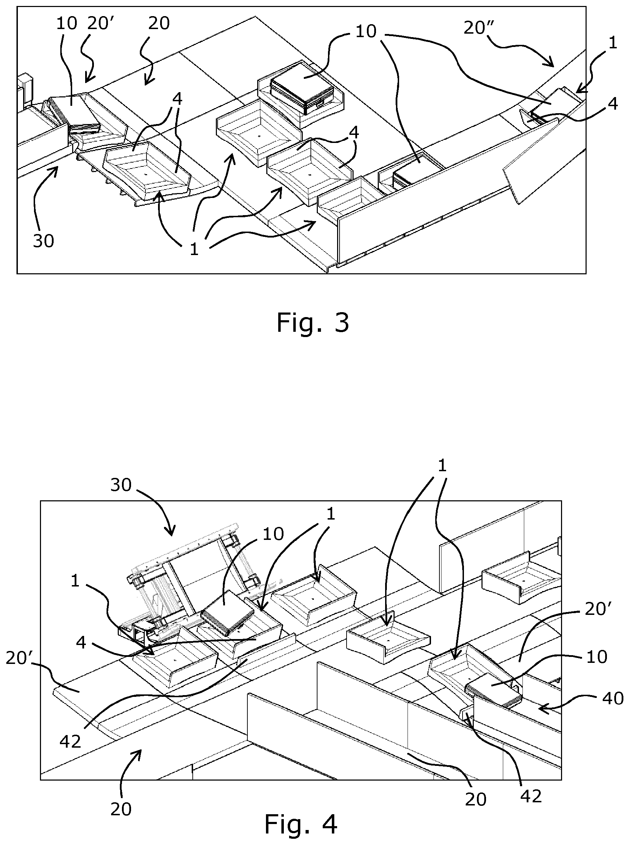

The advantage associated with using load carriers 1 according to this disclosure in an airport baggage handling system is that the there are no special requirements to the pathways or conveyor tracks for the load carriers. The load carriers 1 are capable of driving on any even surface, including an inclined or declined surface. In figures 3 and 4, some examples of pathways in a baggage handling system are shown.

In fig. 3, a schematic example of a pathway 20 for the load carriers 1 is shown. The pathway has a sloping section 20' where it receives a load 10 in a loading section 30. The load carrier 1 is oriented with an open platform 2 towards the loading area and with the side stops 4 placed so that the baggage 10 does not fall off the platform 2 of the load carrier 1.

The load carrier 1 can follow a path, which involves changes in the drive direction. As indicated in fig. 3, the load carrier 1 may also rotate (wheel configuration iii)) so that the side stops 4 are located appropriately relative to the transport direction and to prepare the load carrier 1 for entering an inclined pathway 20".

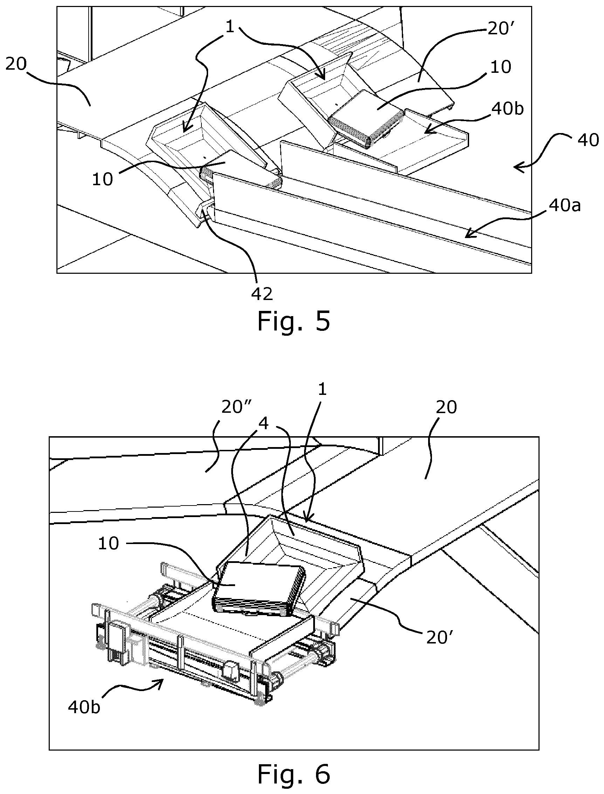

As shown in figures 4 and 5, the baggage handling system may comprise a loading station 30 for loading the baggage onto the load carriers 1, a number of pathways 20 and a plurality unloading stations 40.

In fig. 4, one type of loading station 30 is shown, where the baggage 10 is delivered by being tilted and thereby slides off from a discharger and onto the platform 2 of a load carrier 1 which is driven into a loading position on a section of the pathway 20. This section of pathway may be sloping so that the baggage 10 being received on the load carrier 1 is sliding onto the platform 2 and onto a side stop 4. At the loading position, the load carrier 1 may be positioned next to a stop bar 42, which is at the opposite side of the discharger, so that the load carrier 1 is kept in position when receiving the baggage 10.

The load carriers 1 may have each their destination in the network of pathways laid out. The load carriers 1 receive a piece of baggage 10 at a loading station 30 and transport the baggage 10 to a designated unloading station 40. The unloading stations 40 may be a conveyor belt 40a or a tray 40b or any other suitable means for receiving the baggage 10. In figures 5 to 9, the some examples of the unloading stations 40 of fig. 4 are shown in more detail. The section of the pathway 20' leading the load carrier 1 into the unloading station may be sloped and provided with a stop bar 42 at the end of the pathway 20'. The load carrier 1 is oriented such that no side stop 4 is present that the front of the load carrier 1 when it enters the unloading station pathway 20'. The load carrier 1 then hits the stop bar and the baggage 10 will slide off the platform 2 of the load carrier 1 and onwards to the unloading station equipment (40a or 40b) for further processing, such as loading onto an aircraft or delivery to the passenger at a re-claim carousel system or the like.

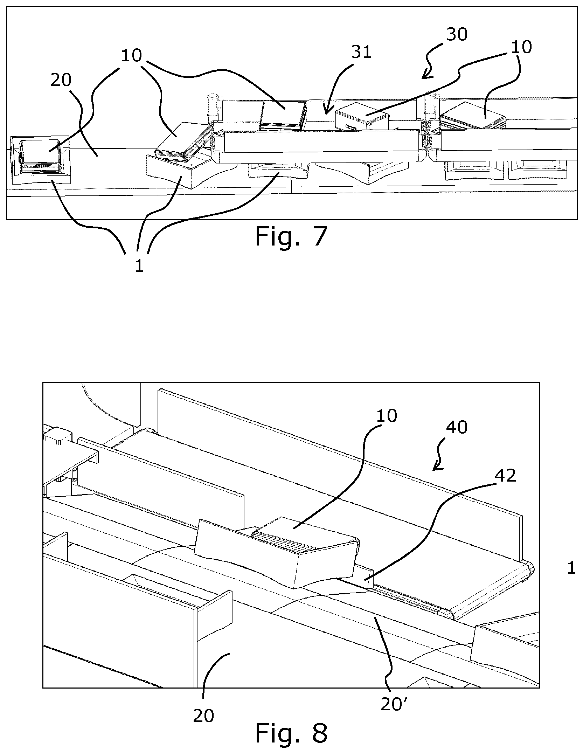

In fig. 7, an example of a loading station 30 is shown, where the baggage 10 is provided on a conveyor 31 above the pathway 20 for the load carriers 1. The baggage 10 is transported on this conveyor 31 with a predetermined speed and underneath a designated load carrier 1 is moved into position to receive the baggage 10 as it falls off the conveyor 31 due to gravity when reaching the end of the belt of the conveyor 31. The conveyor 31 may be positioned just above the load carriers 1 to ensure a soft handling of the baggage 10 during the transfer from the conveyor 31 to the load carrier 1. Other measures may also be provided either additionally or alternatively to the conveyor 31 to ensure a proper handling.

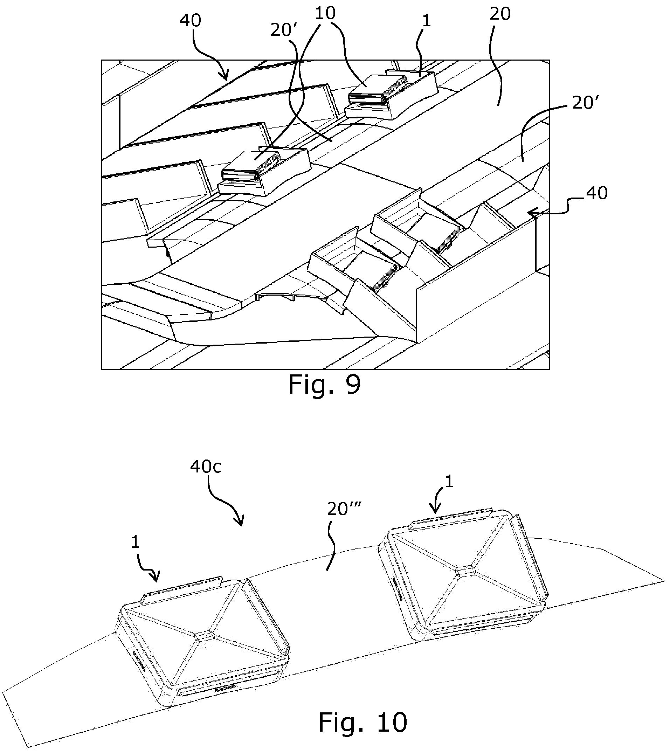

By the invention and with reference to fig. 10, it is also found that the discharge of the load (not shown in fig. 10) from the load carrier 1 could be provided as a dynamic discharge, i.e. where the load 10 is discharged while the load carrier 1 passes through a drop zone. In the drop zone 40c, the pathway is sloped sideways as indicated by 20‴. The load carrier 1 is oriented so that no side stops 4 are present at the lower side of the load carrier 1 whereby the load will slide off when the load carrier 1 passes through the drop zone 40c.

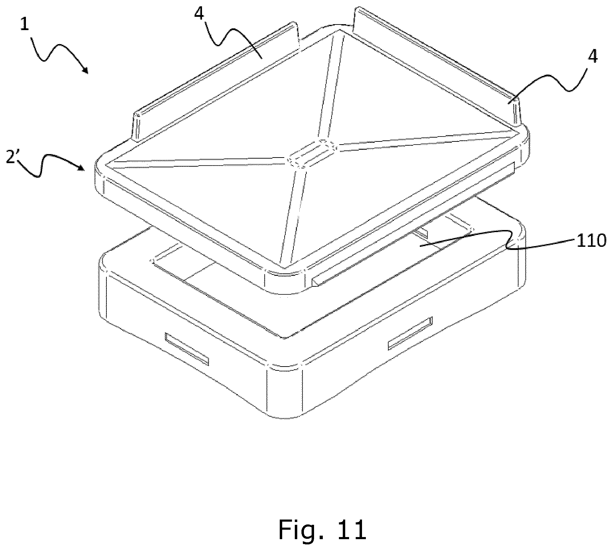

Fig. 11 is a perspective top view of a transport load carrier according to another embodiment of the invention. In this embodiment, the transport load carrier 1 comprises an upper, detachable platform 2' supporting the load, such as one or more pieces of luggage (not shown) during transport. As schematically shown in this exploded view, the platform 2' is detachably mounted on the transport load carrier. For the transport load carrier 1 there is partly visible a corresponding receiving portion 110, preferably an upwards opening, for detachably mounting and securing the detachable platform 2' during transport. Thus, the detachable platform 2' can be secured onto the transport load carrier 1 by a receiving opening fitted and/or adapted onto an protruding counterpart (not shown in this view) on the lower side of the detachable platform 2', which may be possible if the general movement and displacement of the transport load carrier in the baggage handling system (BHS) does not significantly exceed the mechanical fixation provided by such a mechanical fastening mechanism. Alternatively or additionally, the detachable platform 2' can be secured onto the transport load carrier 1 by a mechanically fastening mechanism enabling a detachably and controllable fastening, for example a magnetic locking mechanism or a dedicated mechanical locking mechanism, such as one or more rivets or conical structures with corresponding holes etc., between the detectable platform 2' and the carrier supporting and carrying the platform with the load through the BHS.

In particular, the upper, detachable platform 2' - when detached - can be applied independently for supporting a load, such as one or more items of luggage, during transport in a baggage handling system (BHS). Thus, for example the platform 2' can be transported - before and/or after being carried on the carrier 1 - on a conveyor of a BHS. In this way, the present invention may be integrated with the platforms used in systems also known as Individual Carrier Systems (ICS) with a carrier or container generally supporting the load on a conveyor through the BHS, which are currently used at regional airports and large airport hubs around the world. The advantage of ICS baggage handling systems is that relatively higher speeds are possible than with just conveyor systems, making them an often preferred solution for both medium and high-speed capacity sorting. They provide safe transportation with no or little baggage jams, no 'lost tracking' and baggage is able to be screened while in a container i.e. in the platform 2' according to the present invention. For some applications, such a platform or container for carrying luggage, or baggage, is known as a tote. The tote can typically be manufactured in high numbers, e.g. by injection moulding, making it a cost effective embodiment.

In the figures, the transport system in the form of a baggage handling system is described, where the system includes a plurality of transport load carriers 1, and one or more supply stations or loading stations 30 from which a piece of baggage 10 can be transferred onto the platform of one of the transport load carriers for being transported to a destination, where the baggage is delivered to a designated delivery station, where the transport load carriers then off-loads its load.

A system of pathways are provided or otherwise defined in the facility housing the baggage handling system. The pathway simply comprises a transport surface for the transport load carriers 1 between the supply stations 30 and the delivery stations 40. The system of pathways may include any kind of pathways, i.e. with side rails, without side rails, orthogonal turned pathways, such as left-hand turns and right-hand turns, etc.

A common control system is provided, which is adapted to provide data communication with the transport load carriers for processing and executing individual load transport tasks in the transport system.

This data communication may according to one embodiment include that the load transport task is stored on a control unit of the load carrier 1 and activated by a communication signal from the control system. In another embodiment, the load transportation task may be transmitted to the control unit of the transport load carrier for executing by said load transport carrier. In yet other embodiments, these two data communication methods may be used together.

In general, when directional terms like "horizontal" and "vertical" or similar directional references are used in the present disclosure, these terms are meant to be understood as relative terms e.g. where the term "vertical" refers to a direction essentially perpendicular to the substrate surface, and "horizontal" refers to a direction essentially parallel to the substrate.

Above, the invention is described with reference to some currently preferred embodiments. However, by the invention it is realised that other embodiments and variants may be provided without departing from the scope of the invention as defined in the accompanying claims. For instance, it could be beneficial in some load handling jobs to provide a conveyor on the platform of the load carrier. In particular, a separate top module could be provided to facilitate easy storage capabilities on the load carrier.

## Claims

1. A transport load carrier (1) for a baggage handling system, such as a luggage handling system in an airport, said transport load carrier (1) comprising
- a platform (2) for receiving and accommodating a load, such as one or more items of luggage,
- a plurality of wheels (6) wherein the wheels (6) are self-driven by drive means, and wherein the orientation of the wheels (6) is adjustable by adjustment means for rotating the load carrier (1) or turning its transport direction with or without rotating the load carrier (1), and
- a control unit for controlling the drive means at the wheels and controlling the adjustment means of the wheels for the execution of a load transport task, wherein the orientation of the wheels (6) may be adjusted by swivelling the wheels (6) individually for at least 180°, preferably at least 360°, and wherein the adjustment of the orientation of the wheels (6) is controlled by the control unit, and selectively comprises any of the wheel (6) configurations where
- all wheels (6) are aligned in the same direction;
- a set of wheel (6) is aligned in a determined direction;
- the wheels (6) are aligned for rotating the load carrier about an axis perpendicular or substantially perpendicular to the platform;
- the wheels (6) are turned in mutually blocking directions to produce a locked position.

2. A transport load carrier according to claim 1, wherein all the wheels (6) are mounted in a swivel mount (7) so that the wheels are individually adjustable by the adjustment means.

3. A transport load carrier according to any one of the preceding claims, wherein the wheels (6) are electrically driven and wherein the drive means comprise a drive source in the form of a rechargeable power source.

4. A transport load carrier according to any one of the preceding claims, wherein the load carrier (1) is provided with at least one side stop (4) to prevent the load from falling off the platform during transport or stops, preferably at least two mutually perpendicular side stops (4) of the platform, which preferably are mutually substantially rectangular.

5. A transport load carrier according to any one of the preceding claims, wherein the load carrier (1) is open on two adjacent sides of the platform (2) in order to allow a load to be loaded onto the carrier (1) from either of the open sides.

6. A transport load carrier according to claim 5, wherein said opening on two adjacent sides of the platform facilitates unloading of a load from the transport load carrier 81) by a controlled moving pattern by the transport load carrier (1) causing a unloading force on the load.

7. A transport load carrier according to any one of the preceding claims, wherein the transport load carrier (1) comprises an upper, detachable platform (2') supporting the load during transport, and wherein the detachable platform (2') is detachably mounted on the transport load carrier (1).

8. A transport load carrier according to claim 7, wherein the transport load carrier (1) comprises a corresponding receiving portion (110), preferably an upwards opening, for detachably mounting and securing the upper, detachable platform (2') during transport.

9. A transport load carrier according to claim 7, wherein the upper, detachable platform (2') when detached can be applied independently for supporting the load, such as one or more items of luggage, during transport in a baggage handling system, preferably on a conveyor.

10. A transport load carrier according to any one of the preceding claims, wherein the underside (8) of the platform (2) is concave.

11. A transport load carrier according to any one of the preceding claims, wherein weighing sensors are provided on each wheel (6).

12. A transport load carrier according to any one of the preceding claims, wherein the load carrier (1) is an autonomous controllable vehicle or an automatically guided vehicle.

13. A transport load carrier according to any one of the preceding claims, wherein the control unit comprises receiving means for receiving the load transport task associated with a receipt of a load and which includes information about the destination of the load or load carrier.

14. A transport system, in particular a baggage handling system, such as a luggage handling system in an airport, comprising
- a plurality of transport load carriers (1) according to any of the preceding claims,
- one or more supply stations (30) from which a load can be transferred onto the platform (2) of one of the transport load carriers (1) for being transported to a destination;
- one or more delivery stations (40) at which the transport load carriers (1) can off-load their loads;
- a system of pathways (30) providing at least one transport surface for the transport load carriers (1) between said one or more supply stations (30) and one or more delivery stations (40); and
- a common control system communicating with the transport load carriers for processing and executing individual load transport tasks in the transport system.

15. A transport system according to claim 14, wherein the system of pathways (30) includes an inclined and/or declined or straight and level transport surface on which the transport load carriers (1) can drive.

16. A transport system according to claim 14 or 15, wherein the system of pathways (30) includes pathways with side rails, without side rails, orthogonal turned pathways, such as left-hand turns and right-hand turns.

17. A transport system according to any of claims 14 to 16, wherein at least one supply station (20) comprises a sloping section of pathway (20'), which may be provided with a stop bar (42) on the side opposite a discharger supplying the load onto a load carrier.

18. A transport system according to any of claims 14 to 16, wherein at least one supply station (20) comprises a conveyor above a section of the pathway for the load carriers, so that a load is transported on said conveyor with a predetermined speed and is transferred onto a designated load carrier arranged underneath said conveyor.

19. A transport system according to any of claims 14 to 18, wherein at least one of the delivery stations (40) comprises a section of the pathway which is sloped and provided with a stop bar (42) at the end of said pathway.

20. A transport system according to any of claims 14 to 19, wherein the load transport task being stored on the control unit of the load carrier and activated by a communication signal from the control system; or
the load transportation task is transmitted to the control unit of the transport load carrier for executing by said load transport carrier.

21. A method of transporting a load with an autonomously driven transport load carrier for a baggage handling system, such as a luggage handling system in an airport, said method comprising
- providing a transport system according to any one of claims 14-20;
- feeding a load, such as an item of luggage, onto one of the transport load carriers (1); and
- in a common control system activating a load transport task for the load on the transport load carrier (1).

## Patentansprüche

1. Transportlastträger (1) für ein Gepäckabfertigungssystem, wie ein Gepäckabfertigungssystem in einem Flughafen, der Transportlastträger (1) umfassend
- eine Plattform (2) zum Entgegennehmen und Aufnehmen einer Last, wie eines oder mehrerer Gepäckstücke,
- eine Vielzahl von Rädern (6), wobei die Räder (6) durch Antriebsmittel selbstangetrieben sind und wobei die Ausrichtung der Räder (6) zum Drehen des Lastträgers (1) oder zum Umdrehen seiner Transportrichtung mit oder ohne Drehen des Lastträgers (1) durch Verstellmittel verstellbar ist, und
- eine Steuereinheit zum Steuern der Antriebsmittel an den Rädern und zum Steuern der Verstellmittel der Räder für die Ausführung einer Lasttransportaufgabe, wobei die Ausrichtung der Räder (6) durch individuelles Schwenken der Räder (6) um mindestens 180°, vorzugsweise mindestens 360°, verstellt werden kann, und
wobei die Verstellung der Ausrichtung der Räder (6) durch die Steuereinheit gesteuert wird und selektiv eine der Konfigurationen Räder (6) umfasst, bei denen
- alle Räder (6) in die gleiche Richtung ausgerichtet sind;
- ein Satz von Rädern (6) in eine bestimmte Richtung ausgerichtet ist;
- die Räder (6) zum Drehen des Lastträgers um eine zur Plattform senkrechte oder im Wesentlichen senkrechte Achse ausgerichtet sind;
- die Räder (6) in sich gegenseitig blockierenden Richtungen gedreht sind, sodass sich eine verriegelte Stellung ergibt.

2. Transportlastträger nach Anspruch 1, wobei alle Räder (6) in einer Schwenklagerung (7) montiert sind, so dass die Räder durch die Verstellmittel individuell verstellbar sind.

3. Transportlastträger nach einem der vorstehenden Ansprüche, wobei die Räder (6) elektrisch angetrieben werden und wobei die Antriebsmittel eine Antriebsquelle in Form einer wiederaufladbaren Energiequelle umfassen.

4. Transportlastträger nach einem der vorstehenden Ansprüche, wobei der Lastträger (1) mit mindestens einem Seitenanschlag (4) zum Verhindern, dass die Last während des Transports oder bei Stopps von der Plattform fällt, vorzugsweise mit mindestens zwei zueinander senkrechten Seitenanschlägen (4) der Plattform, die vorzugsweise zueinander im Wesentlichen rechteckig sind, versehen ist.

5. Transportlastträger nach einem der vorstehenden Ansprüche, wobei der Lastträger (1) an zwei benachbarten Seiten der Plattform (2) offen ist, um es zu ermöglichen, dass eine Last von einer der offenen Seiten auf den Träger (1) geladen wird.

6. Transportlastträger nach Anspruch 5, wobei die Öffnung an zwei benachbarten Seiten der Plattform das Entladen einer Last vom Transportlastträger (1) durch ein kontrolliertes Bewegungsmuster durch den Transportlastträger (1), das eine Entladekraft auf die Last bewirkt, erleichtert.

7. Transportlastträger nach einem der vorstehenden Ansprüche, wobei der Transportlastträger (1) eine obere, abnehmbare Plattform (2') umfasst, die die Last während des Transports trägt, und wobei die abnehmbare Plattform (2') abnehmbar auf den Transportlastträger (1) montiert ist.

8. Transportlastträger nach Anspruch 7, wobei der Transportlastträger (1) einen entsprechenden Aufnahmeabschnitt (110), vorzugsweise eine nach oben offene Öffnung zum abnehmbaren Montieren und Befestigen der oberen, abnehmbaren Plattform (2') während des Transports, umfasst.

9. Transportlastträger nach Anspruch 7, wobei die obere, abnehmbare Plattform (2'), wenn sie abgenommen ist, unabhängig zum Tragen der Last, wie einem oder mehreren Gepäckstücken, während des Transports in einem Gepäckabfertigungssystem, vorzugsweise auf einem Förderband, verwendet werden kann.

10. Transportlastträger nach einem der vorstehenden Ansprüche, wobei die Unterseite (8) der Plattform (2) konkav ist.

11. Transportlastträger nach einem der vorstehenden Ansprüche, wobei an jedem Rad (6) Wiegesensoren vorgesehen sind.

12. Transportlastträger nach einem der vorstehenden Ansprüche, wobei der Lastträger (1) ein autonomes steuerbares Fahrzeug oder ein automatisch geleitetes Fahrzeug ist.

13. Transportlastträger nach einem der vorstehenden Ansprüche, wobei die Steuereinheit Empfangsmittel zum Empfangen der Lasttransportaufgabe, die mit einem Empfang einer Last verbunden ist und die Informationen über das Ziel der Last oder des Lastträgers enthält, umfasst.

14. Transportsystem, insbesondere ein Gepäckabfertigungssystem, wie ein Gepäckabfertigungssystem in einem Flughafen, umfassend
- eine Vielzahl von Transportlastträgern (1) nach einem der vorstehenden Ansprüche,
- eine oder mehrere Beladestationen (30), von denen eine Last auf die Plattform (2) eines der Transportlastträger (1) zum Transport zu einem Bestimmungsort übertragen werden kann;
- eine oder mehrere Entladestationen (40), an denen die Transportlastträger (1) ihre Lasten abladen können;
- ein System von Fahrwegen (30), das mindestens eine Transportoberfläche für die Transportlastträger (1) zwischen der einen oder den mehreren Beladestationen (30) und einer oder mehreren Entladestationen (40) bereitstellt; und
- ein gemeinsames Steuersystem, das mit den Transportlastträgern zum Verarbeiten und Ausführen einzelner Lasttransportaufgaben in dem Transportsystem kommuniziert.

15. Transportsystem nach Anspruch 14, wobei das System von Fahrwegen (30) eine ansteigende und/oder abfallende oder gerade und horizontale Transportoberfläche umfasst, auf welcher die Transportlastträger (1) fahren können.

16. Transportsystem nach Anspruch 14 oder 15, wobei das System von Fahrwegen (30) Fahrwege mit Seitenschienen, ohne Seitenschienen, orthogonal abbiegende Fahrwege, wie Abbiegungen nach links und Abbiegungen nach rechts, einschließt.

17. Transportsystem nach einem der Ansprüche 14 bis 16, wobei mindestens eine Beladestation (20) einen geneigten Abschnitt des Fahrweges (20') umfasst, der mit einer Anschlagstange (42) auf der Seite gegenüber einer Ausgabevorrichtung, die die Last auf einen Lastträger lädt, versehen sein kann.

18. Transportsystem nach einem der Ansprüche 14 bis 16, wobei mindestens eine Beladestation (20) oberhalb eines Abschnitts des Fahrwegs für die Lastträger einen Förderer umfasst, so dass eine Last auf dem Förderer mit einer vorbestimmten Geschwindigkeit transportiert und auf einen vorgesehenen Lastträger übertragen wird, der unterhalb des Förderers angeordnet ist.

19. Transportsystem nach einem der Ansprüche 14 bis 18, wobei mindestens eine der Entladestationen (40) einen Abschnitt des Fahrweges umfasst, der geneigt ist und mit einer Anschlagstange (42) am Ende des Fahrweges versehen ist.

20. Transportsystem nach einem der Ansprüche 14 bis 19, wobei die Lasttransportaufgabe auf der Steuereinheit des Lastträgers gespeichert und durch ein Kommunikationssignal vom Steuersystem aktiviert wird; oder
die Lasttransportaufgabe an die Steuereinheit des Transportlastträgers zur Ausführung durch den Lasttransportträger übertragen wird.

21. Verfahren zum Transportieren einer Last mit einem autonom angetriebenen Transportlastträger für ein Gepäckabfertigungssystem, wie ein Gepäckabfertigungssystem in einem Flughafen, das Verfahren umfassend
- Bereitstellen eines Transportsystems nach einem der Ansprüche 14 bis 20;
- Zuführen einer Last, wie eines Gepäckstücks, auf einen der Transportlastträger (1); und
- Aktivieren einer Lasttransportaufgabe für die Last auf dem Transportlastträger (1) in einem gemeinsamen Steuersystem.

## Revendications

1. Porte-charge de transport (1) pour un système de manutention de bagages, tel qu'un système de manutention de bagages dans un aéroport, ledit porte-charge de transport (1) comprenant
- une plate-forme (2) permettant de recevoir et de loger une charge, telle qu'un ou plusieurs articles de bagage,
- une pluralité de roues (6), dans lequel les roues (6) sont autoentraînées par un moyen d'entraînement, et dans lequel l'orientation des roues (6) est ajustable par un moyen d'ajustement permettant de faire tourner le porte-charge (1) ou de tourner son sens de transport avec ou sans rotation du porte-charge (1), et
- une unité de commande destinée à commander le moyen d'entraînement au niveau des roues et à commander le moyen d'ajustement des roues pour l'exécution d'une tâche de transport de charge, dans lequel l'orientation des roues (6) peut être ajustée en faisant pivoter les roues (6) individuellement sur au moins 180°, de préférence au moins 360°, et
dans lequel l'ajustement de l'orientation des roues (6) est commandé par l'unité de commande et comprend sélectivement l'une quelconque des configurations de roue (6) où
- toutes les roues (6) sont alignées dans le même sens ;
- un jeu de roues (6) est aligné dans un sens déterminé ;
- les roues (6) sont alignées pour la rotation du porte-charge autour d'un axe perpendiculaire ou sensiblement perpendiculaire à la plate-forme ;
- les roues (6) sont tournées dans des sens de blocage mutuel pour produire une position verrouillée.

2. Porte-charge de transport selon la revendication 1, dans lequel toutes les roues (6) sont montées dans un support pivotant (7) de sorte que les roues sont ajustables individuellement par le moyen d'ajustement.

3. Porte-charge de transport selon l'une quelconque des revendications précédentes, dans lequel les roues (6) sont entraînées électriquement et dans lequel le moyen d'entraînement comprend une source d'entraînement sous la forme d'une source d'énergie rechargeable.

4. Porte-charge de transport selon l'une quelconque des revendications précédentes, dans lequel le porte-charge (1) est pourvu d'au moins une butée latérale (4) pour empêcher la charge de tomber de la plate-forme pendant le transport ou les arrêts, de préférence au moins deux butées latérales (4) mutuellement perpendiculaires de la plate-forme, qui sont de préférence mutuellement sensiblement rectangulaires.

5. Porte-charge de transport selon l'une quelconque des revendications précédentes, dans lequel le porte-charge (1) est ouvert sur deux côtés adjacents de la plate-forme (2) afin de permettre à une charge d'être chargée sur le support (1) à partir de l'un ou l'autre des côtés ouverts.

6. Porte-charge de transport selon la revendication 5, dans lequel ladite ouverture sur deux côtés adjacents de la plate-forme facilite le déchargement d'une charge à partir du porte-charge de transport (1) par un modèle de déplacement commandé par le porte-charge de transport (1) provoquant une force de déchargement sur la charge.

7. Porte-charge de transport selon l'une quelconque des revendications précédentes, dans lequel le porte-charge de transport (1) comprend une plate-forme supérieure amovible (2') supportant la charge pendant le transport, et dans lequel la plate-forme amovible (2') est montée de manière amovible sur le porte-charge de transport (1).

8. Porte-charge de transport selon la revendication 7, dans lequel le porte-charge de transport (1) comprend une partie de réception correspondante (110), de préférence une ouverture vers le haut, permettant de monter et fixer de manière amovible la plate-forme supérieure amovible (2') pendant le transport.

9. Porte-charge de transport selon la revendication 7, dans lequel la plate-forme supérieure amovible (2'), lorsqu'elle est séparée, peut être appliquée indépendamment pour le support de la charge, telle qu'un ou plusieurs articles de bagage, pendant le transport dans un système de manutention de bagages, de préférence sur un convoyeur.

10. Porte-charge de transport selon l'une quelconque des revendications précédentes, dans lequel la face inférieure (8) de la plate-forme (2) est concave.

11. Porte-charge de transport selon l'une quelconque des revendications précédentes, dans lequel des capteurs de pesage sont prévus sur chaque roue (6).

12. Porte-charge de transport selon l'une quelconque des revendications précédentes, dans lequel le porte-charge (1) est un véhicule à commande autonome ou un véhicule à guidage automatique.

13. Porte-charge de transport selon l'une quelconque des revendications précédentes, dans lequel l'unité de commande comprend un moyen de réception permettant de recevoir la tâche de transport de charge associée à une réception d'une charge et qui comporte des informations concernant la destination de la charge ou du porte-charge.

14. Système de transport, en particulier un système de manutention de bagages, tel qu'un système de manutention de bagages dans un aéroport, comprenant
- une pluralité de porte-charges de transport (1) selon l'une quelconque des revendications précédentes,
- un ou plusieurs postes d'approvisionnement (30) à partir desquels une charge peut être transférée sur la plate-forme (2) de l'un des porte-charges de transport (1) pour être transportée vers une destination ;
- un ou plusieurs postes de livraison (40) au niveau desquels les porte-charges de transport (1) peuvent décharger leurs charges ;
- un système de voies (30) fournissant au moins une surface de transport pour les porte-charges de transport (1) entre lesdits un ou plusieurs postes d'approvisionnement (30) et un ou plusieurs postes de livraison (40) ; et
- un système de commande commun communiquant avec les porte-charges de transport pour le traitement et l'exécution de tâches de transport de charges individuelles dans le système de transport.

15. Système de transport selon la revendication 14, dans lequel le système de voies (30) comporte une surface de transport inclinée et/ou déclinée ou droite et plane sur laquelle les porte-charges de transport (1) peuvent rouler.

16. Système de transport selon la revendication 14 ou 15, dans lequel le système de voies (30) comporte des voies avec des rails latéraux, sans rails latéraux, des voies tournées orthogonales, telles que des virages à gauche et des virages à droite.

17. Système de transport selon l'une quelconque des revendications 14 à 16, dans lequel au moins une station d'approvisionnement (20) comprend une section inclinée de voie (20'), qui peut être pourvue d'une barre de butée (42) sur le côté opposé à un déchargeur approvisionnant la charge sur un porte-charge.

18. Système de transport selon l'une quelconque des revendications 14 à 16, dans lequel au moins un poste d'approvisionnement (20) comprend un convoyeur au-dessus d'une section de la voie pour les porte-charges, de sorte qu'une charge est transportée sur ledit convoyeur à une vitesse prédéterminée et est transférée sur un porte-charge désigné agencé sous ledit convoyeur.

19. Système de transport selon l'une quelconque des revendications 14 à 18, dans lequel au moins l'un des postes de livraison (40) comprend une section de la voie qui est inclinée et pourvue d'une barre de butée (42) au niveau de l'extrémité de ladite voie.

20. Système de transport selon l'une quelconque des revendications 14 à 19, dans lequel la tâche de transport de charge est stockée sur l'unité de commande du porte-charge et activée par un signal de communication provenant du système de commande ; ou
la tâche de transport de charge est transmise à l'unité de commande du porte-charge de transport pour une exécution par ledit porte-charge de transport.

21. Procédé de transport d'une charge avec un porte-charge de transport à entraînement autonome pour un système de manutention de bagages, tel qu'un système de manutention de bagages dans un aéroport, ledit procédé comprenant
- la fourniture d'un système de transport selon l'une quelconque des revendications 14 à 20 ;
- l'alimentation d'une charge, telle qu'un article de bagage, sur l'un des porte-charges de transport (1) ; et
- dans un système de commande commun, l'activation d'une tâche de transport de charge pour la charge sur le porte-charge de transport (1).
